(19)
**Europäisches Patentamt**
**European Patent Office**
**Office européen des brevets**

(11)  **EP 2 189 640 A1**

(12)  **EUROPÄISCHE PATENTANMELDUNG**

(43) Veröffentlichungstag:
26.05.2010  Patentblatt 2010/21

(51) Int Cl.:
*F02D 31/00* (2006.01)      *F02D 41/02* (2006.01)
*F02D 41/26* (2006.01)      *F16H 63/50* (2006.01)

(21) Anmeldenummer: 09172975.6

(22) Anmeldetag: 14.10.2009

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**
Benannte Erstreckungsstaaten:
**AL BA RS**

(30) Priorität: **19.11.2008  DE 102008043848**

(71) Anmelder: **ZF Friedrichshafen AG**
**88038 Friedrichshafen (DE)**

(72) Erfinder: **Mansour, Rachid**
**88677 Markdorf (DE)**

(54)  **Elektronische Regleranordnung zur Regelung der Drehzahl einer Brennkraftmaschine**

(57)  Die Erfindung betrifft eine elektronische Regleranordnung zur Regelung der Drehzahl einer Brennkraftmaschine eines mit einem automatisiert betätigten Getriebe ausgestatteten Kraftfahrzeuges, bei welcher eine Differenz zwischen einer Ist-Drehzahl ($n_{Ist}$) und einer Soll-Drehzahl ($n_{Soll}$) der Brennkraftmaschine bestimmbar und anhand dieser Differenz ein Solldrehmoment ($T_{Soll}$) in einer Reglereinheit (4) ermittelbar ist, wobei die Reglereinheit (4) mit einem Motorsteuergerät (6) zum Umsetzen des Solldrehmoments ($T_{Soll}$) in ein Realdrehmoment ($T_{Real}$) in Verbindung steht und eine Rückübermittlung der sich daraufhin einstellenden Ist-Drehzahl ($n_{Ist}$) an die Reglereinheit (4) erfolgt, wobei ferner die Reglereinheit (4) nach Art eines PID-Reglers mit nachgeschaltetem Fuzzy-Logik-Algorithmus ausgebildet ist, um eine adaptive und schnelle Regelung der Drehzahl zu ermöglichen.

Fig. 1

**Beschreibung**

Die Erfindung betrifft eine elektronische Regleranordnung zur Regelung der Drehzahl einer Brennkraftmaschine eines mit einem automatisiert betätigten Getriebe ausgestatteten Kraftfahrzeuges, bei welcher eine Differenz zwischen einer Ist-Drehzahl und einer Soll-Drehzahl der Brennkraftmaschine bestimmbar und anhand dieser Differenz ein Solldrehmoment in einer Reglereinheit ermittelbar ist, wobei die Reglereinheit mit einem Motorsteuergerät zum Umsetzen des Solldrehmoments in ein Realdrehmoment in Verbindung steht und eine Rückübermittlung der sich daraufhin einstellenden Ist-Drehzahl an die Reglereinheit erfolgt.

Bei Kraftfahrzeugen mit automatisiert betätigten Getrieben kommen üblicherweise im Bereich des Getriebes Regleranordnungen zur Anwendung, um bei Anfahr- und Schaltvorgängen einen Wechsel des Übersetzungsverhältnisses im Getriebe möglichst schnell und komfortabel durchführen zu können. Hierbei ist insbesondere die Wahrnehmung des Fahrzeugführers in Bezug auf Schwingungen und Ruckeln des Antriebsstranges von Bedeutung. Eine übliche Vorgehensweise ist dabei ein Eingriff in die Motorsteuerung über die Regleranordnung bei einem Anfahrvorgang bzw. einem Gangwechsel, um gezielt einer Schwingung des Antriebsstranges durch Regelung eines Parameters der Brennkraftmaschine entgegenzuwirken.

Aus der DE 100 25 586 A1 ist eine derartige elektronische Regleranordnung bekannt, welche aus einem Getriebesteuergerät und einem Motorsteuergerät besteht, die über ein Bussystem miteinander in Verbindung stehen. Hierbei empfängt das Getriebesteuergerät vom Motorsteuergerät Ist-Größen, wie die Ist-Drehzahl und das Ist-Drehmoment der Brennkraftmaschine, und kann im Gegenzug die Parameter Soll-Drehzahl und ein erstes Soll-Drehmoment sowie eine Eingriffsgröße an das Motorsteuergerät übermitteln. In Zusammenwirken mit einem innerhalb des Motorsteuergeräts angeordneten Drehzahlregler, welcher ein zweites Soll-Drehmoment zur Verfügung stellt, wird mittels einer Entscheidungslogik des Motorsteuergeräts bei einem Gangwechsel und dem hiermit verbundenen Einkuppelvorgang einer automatischen Kupplung versucht, schnelle Änderungen der Drehzahl der Brennkraftmaschine mittels einer Regelung des Drehmoments zu kompensieren.

Nachteilhaft an einer derartigen Anordnung ist, dass die hierdurch verwirklichte Regelung der Brennkraftmaschine bezüglich der Regelgenauigkeit und der Geschwindigkeit mangelhaft ist und zudem in gewissen Zeitabständen eine Nachkalibrierung erfolgen muss.

Es ist daher die Aufgabe der vorliegenden Erfindung, eine elektronische Regleranordnung zur Regelung der Drehzahl einer Brennkraftmaschine sowie ein Verfahren zu deren Betrieb zur Verfügung zu stellen, welche eine hohe Regelgüte sowie eine hohe Geschwindigkeit aufweist.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe ausgehend vom Oberbegriff des Anspruchs 4 in Verbindung mit dessen kennzeichnenden Merkmalen. Die darauffolgenden, abhängigen Ansprüche geben jeweils vorteilhafte Weiterbildungen der Erfindung wieder. Bezüglich eines Computerprogrammprodukts zur Ausführung der Erfindung sowie eines Datenträgers zu dessen Speicherung wird auf die Ansprüche 9 und 10 verwiesen.

Die Erfindung umfasst die technische Lehre, dass die Reglereinheit nach Art eines PID-Reglers mit nachgeschaltetem Fuzzy-Logik-Algorithmus ausgebildet ist, um eine adaptive und schnelle Regelung der Drehzahl der Brennkraftmaschine zu ermöglichen. Dabei wird ein durch das Motorsteuergerät des Kraftfahrzeuges einzustellende Solldrehmoment mittels der PID-Regelung und innerhalb des Fuzzy-Logik-Algorithmus ermittelt, wobei im Algorithmus die Einzelschritte Fuzzifizierung, Regelbasis-Inferenz und Defuzzifizierung abgearbeitet werden. Durch das symbiotische Zusammenwirken eines PID-Reglers mit einer Fuzzy-Logik wird eine sehr präzise und adaptive Regelung zum Anpassen der Drehzahl einer Brennkraftmaschine verwirklicht. Deshalb zeichnet sich diese Regelung durch eine hohe Schnelligkeit aus.

Gemäß einer Ausführungsform der Erfindung ist die Reglereinheit Teil eines Getriebesteuergeräts, welches über ein Bussystem mit dem Motorsteuergerät in Verbindung steht. Durch Integrierung der Reglereinheit in ein Steuergerät des Getriebes kann in diesem Bereich ein sehr kompaktes System ausgebildet werden, in welchem auch andere Parameter des Getriebes regelbar sind. Zudem ist über die Verbindung mittels eines Bussystems mit dem Motorsteuergerät eine schnelle und zuverlässige Übertragung von Daten möglich.

In Weiterbildung der Erfindung ist das Getriebe nach Art eines automatisierten Schaltgetriebes ausgebildet. Bei Verwendung des erfindungsgemäßen Systems bei einem automatisierten Schaltgetriebe kann eine wesentliche Verbesserung des Komforts bei Schaltvorgängen dieses Getriebetyps erzielt werden.

Entsprechend einer vorteilhaften Ausführungsform der Erfindung wird die Differenz zwischen einer Ist- und einer Soll-Drehzahl der Brennkraftmaschine im Rahmen der Fuzzifizierung mindestens drei unscharfen Mengen mit einem bestimmten Zugehörigkeitsgrad zugeordnet. Noch vorteilhafter erfolgt eine Zuordnung in die genau drei unscharfen Mengen "OK", "Negativ" und "Positiv" mit dem entsprechenden Zugehörigkeitsgrad, Dadurch kann die Eingangsgröße des Fuzzy-Logik-Algorithmus mit einer ausreichenden Genauigkeit durch den Algorithmus verarbeitet werden, während gleichzeitig der Rechenaufwand in einem gut bewältigbaren Rahmen verbleibt.

In Weiterbildung der Erfindung wird im Rahmen der Regelbasisinferenz eine Wenn-Dann-Regelstrategie mittels Minimumbildung durchgeführt. Dies hat den Vorteil, dass dadurch eine einfache Implementierung der Regelung möglich ist.

Gemäß einer weiteren vorteilhaften Ausführungsform der Erfindung wird im Rahmen der Defuzzifizierung der Wert des Solldrehmoments nach Art einer Schwerpunktmethode gebildet. Dadurch wird am Ende des Fuzzy-Logik-Algorithmus auf zuverlässige Art und Weise ein Wert für das Solldrehmoment der Brennkraftmaschine errechnet.

Die erfindungsgemäße Lösung lässt sich auch als Computerprogrammprodukt verkörpern, welches, wenn es auf den Prozessoren der Regleranordnung läuft, die Prozessoren softwaremäßig anleitet, die zugeordneten erfindungsgegenständlichen Verfahrensschritte durchzuführen.

In diesem Zusammenhang gehört auch ein computerlesbares Medium zum Gegenstand der Erfindung, auf dem ein vorstehend beschriebenes Computerprogrammprodukt abrufbar gespeichert ist.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:

Fig.1    ein schematisches Blockschaltbild der erfindungsgemäßen Regleranordnung; und

Fig.2    ein Ablaufdiagramm des Rechenablaufs innerhalb der erfindungsgemäßen Regleranordnung.

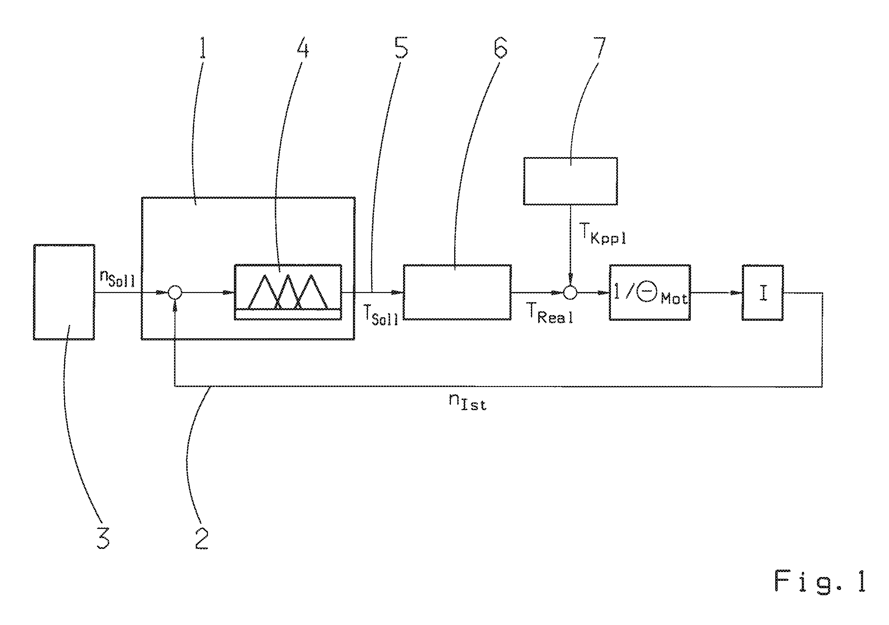

In Fig.1 ist ein Blockschaltbild der erfindungsgemäßen elektronischen Regleranordnung dargestellt, bei welcher in einem Getriebesteuergerät 1 eine Differenz aus einer Ist-Drehzahl $n_{Ist}$ und einer Soll-Drehzahl $n_{Soll}$ gebildet wird. Die Ist-Drehzahl $n_{Ist}$ wird hierzu dem Getriebesteuergerät 1 über eine Leitung 2 zugeführt, während die Soll-Drehzahl $n_{Soll}$ über einen Speicher 3 abrufbar ist. Des Weiteren umfasst das Getriebesteuergerät 1 eine Reglereinheit 4, die aus einem PID-Regler mit einem nachgeschalteten Fuzzy-Logik-Algorithmus besteht. In dieser Reglereinheit 4 wird anhand der berechneten Differenz aus Ist-Drehzahl $n_{Ist}$ und Soll-Drehzahl $n_{Soll}$ mittels des Fuzzy-Logik-Algorithmus ein Solldrehmoment $T_{Soll}$ ermittelt, welches über eine Leitung 5 in Form eines Datenbusses an ein Motorsteuergerät 6 der Brennkraftmaschine übermittelt wird. Durch das Motorsteuergerät 6 wird daraufhin ohne signifikante Verzögerung ein Realdrehmoment $T_{Real}$ eingestellt, welches allerdings um ein Kupplungsmoment $T_{Kppl}$ durch eine sich schließende, automatische Kupplung 7 reduziert wird. Aus dem sich insgesamt einstellenden Drehmoment kann mittels der Rotationsträgheit der Brennkraftmaschine mit Schwungscheibe und Kupplung $\Theta_{Mot}$ und einer daran anschließenden Integration die Ist-Drehzahl $n_{Ist}$ ermittelt werden, welche über Leitung 2 wiederum dem Getriebesteuergerät 1 zugeführt wird.

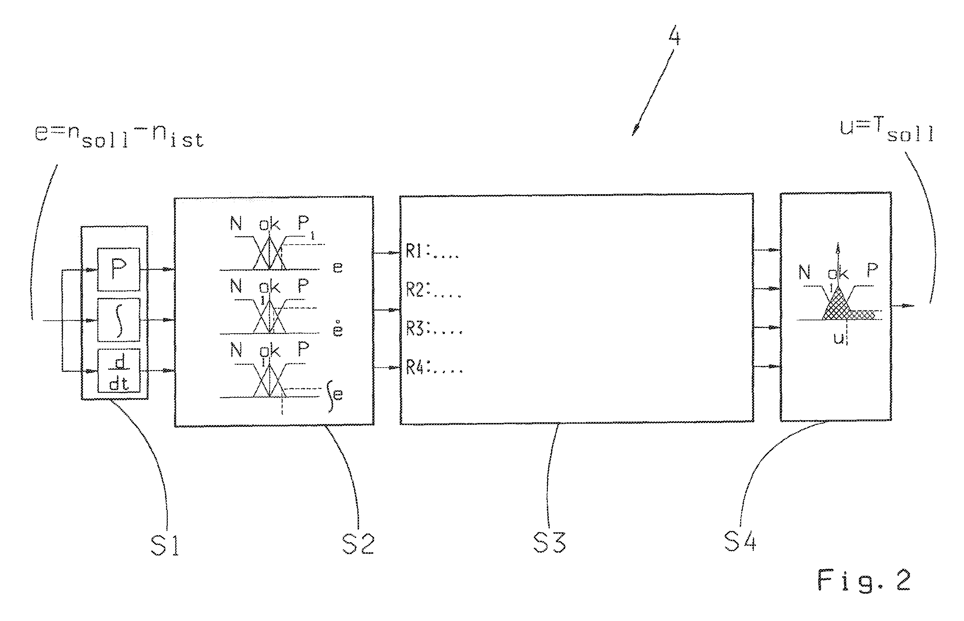

In Fig.2 ist ein Ablaufdiagramm zu sehen, welches den in der Reglereinheit 4 ablaufenden Prozess darstellt. Innerhalb der Reglereinheit 4 wird in vier Schritten S1-S4 aus einer Eingangsgröße e, welche durch die Differenz aus der Soll-Drehzahl $n_{Soll}$ und der Ist-Drehzahl $n_{Ist}$ gebildet wird, eine Ausgangsgröße u in Form des Solldrehmoments $T_{Soll}$ ermittelt. In einem ersten Schritt S1 wird die Eingangsgröße e durch die PID-Regelung in einen Proportional-, einen Integral- und einen Differentialanteil zerlegt. Im darauffolgenden Schritt S2 erfolgt die sogenannte Fuzzifizierung, in welcher die einzelnen Anteile jeweils drei unscharfen Mengen mit einem bestimmten Zugehörigkeitsgrad zugeordnet werden. Die drei unscharfen Mengen werden hierbei gebildet durch "Negativ", welche eine Trapezcharakteristik aufweist und mit N dargestellt ist, durch "OK" mit einer Dreieckscharakteristik und durch "Positiv", die ebenfalls eine Trapezcharakteristik aufweist und mit P bezeichnet ist. Jeder Anteil der Eingangsgröße e wird den drei unscharfen Mengen jeweils mit einem bestimmten Zugehörigkeitsgrad in Prozent zugeteilt. Entsprechend dieses ermittelten Zugehörigkeitsgrades wird in einem dritten Schritt S3, der sogenannten Regelbasis-Inferenz, mittels einer Wenn-Dann-Regelstrategie anhand von festgelegten Regeln die Berechnung der Ausgangsgröße u vorbereitet. So kann eine erste bzw. zweite Wenn-Dann-Bedingung R1 bzw. R2 beispielsweise ausgedrückt werden durch

R1: wenn e = ok und è= ok und ∫e = ok dann u = ok bzw.
R2: wenn e = p und è = ok und ∫e = ok dann u = n.

In Form einer Prämissenauswertung wird hierbei der Erfüllungsgrad jeder Prämisse berechnet, wobei eine Minimumbildung der Zugehörigkeitsgrade durchgeführt wird. Im Anschluss daran wird entsprechend des Erfüllungsgrades der jeweiligen Prämisse auf den Aktivierungsgrad der Handlungsanweisungen geschlossen. Diese einzelnen Handlungsanweisungen werden daraufhin mittels einer Oder-Verknüpfung aneinandergereiht. Im darauf folgenden Schritt S4, der sogenannten Defuzzifizierung wird mittels der Schwerpunktmethode

$$u = \frac{\sum_{i=1}^{n} h_i u_i}{\sum_{i=1}^{n} h_i}$$

$h_i$... Höhe des Ausgangsfuzzysets der i-ten Regel

$u_i$... Schwerpunkt des Ausgangsfuzzysets

der scharfe Ausgangswert u aus der resultierenden Ergebnis-Fuzzy-Menge aus Schritt S3 berechnet. Dieser stellt das einzustellende Solldrehmoment $T_{Soll}$ dar.

Mittels der erfindungsgemäßen elektronischen Regleranordnung und des zugehörigen Verfahrens ist es somit möglich, eine Regelung der Drehzahl einer Brennkraftmaschine zu schaffen, welche robust gegenüber Änderungen der Streckenparameter sowie des Sollwerts $n_{Soll}$ und weniger anfällig für Störungen ist.

Bezugszeichen

| | |
|---|---|
| 1 | Getriebesteuergerät |
| 2 | Leitung |
| 3 | Speicher |
| 4 | Reglereinheit |
| 5 | Leitung Bussystem |
| 6 | Motorsteuergerät |
| 7 | Automatische Kupplung |

| | |
|---|---|
| $n_{Soll}$ | Soll-Drehzahl |
| $n_{Ist}$ | Ist-Drehzahl |
| $T_{Soll}$ | Solldrehmoment |
| $T_{Real}$ | Realdrehmoment |
| $T_{Kppl}$ | Kupplungsmoment |
| $\Theta_{Mot}$ | Rotationsträgheit der Brennkraftmaschine mit Schwungscheibe und Kupplung |
| e | Eingangsgröße |
| u | Ausgangsgröße |
| S1 | Schritt 1: PID-Regelung |
| S2 | Schritt 2: Fuzzifizierung |
| S3 | Schritt 3: Regelbasis-Inferenz |
| S4 | Schritt 4: Defuzzifizierung |

**Patentansprüche**

1. Elektronische Regleranordnung zur Regelung der Drehzahl einer Brennkraftmaschine eines mit einem automatisiert betätigten Getriebe ausgestatteten Kraftfahrzeuges, bei welcher eine Differenz zwischen einer Ist-Drehzahl ($n_{Ist}$) und einer Soll-Drehzahl ($n_{Soll}$) der Brennkraftmaschine bestimmbar und anhand dieser Differenz ein Solldrehmoment ($T_{Soll}$) in einer Reglereinheit (4) ermittelbar ist, wobei die Reglereinheit (4) mit einem Motorsteuergerät (6) zum Umsetzen des Solldrehmoments ($T_{Soll}$) in ein Realdrehmoment ($T_{Real}$) in Verbindung steht und eine Rückübermittlung der sich daraufhin einstellenden Ist-Drehzahl ($n_{Ist}$) an die Reglereinheit (4) erfolgt, **dadurch gekennzeichnet, dass** die Reglereinheit (4) nach Art eines PID-Reglers mit nachgeschaltetem Fuzzy-Logik-Algorithmus ausgebildet ist, um eine adaptive und schnelle Regelung der Drehzahl zu ermöglichen.

**2.** Elektronische Regleranordnung nach Anspruch 1, **dadurch gekennzeichnet, dass** die Reglereinheit (4) Teil eines Getriebesteuergeräts (1) ist, welches über ein Bussystem (5) mit dem Motorsteuergerät (6) in Verbindung steht.

**3.** Elektronische Regleranordnung nach Anspruch 1 oder 2, **dadurch gekennzeichnet, dass** das Getriebe nach Art eines automatisierten Schaltgetriebes ausgebildet ist.

**4.** Verfahren zur Regelung der Drehzahl einer Brennkraftmaschine eines Kraftfahrzeuges, umfassend folgende Schritte einer Regleranordnung:

- Berechnen einer Differenz zwischen einer Ist-Drehzahl ($n_{Ist}$) und einer Soll-Drehzahl ($n_{Soll}$) und Ermitteln eines Solldrehmoments ($T_{Soll}$) anhand der berechneten Differenz durch eine Reglereinheit (4),
- Übermitteln des Solldrehmoments ($T_{Soll}$) an ein Motorsteuergerät (6) des Kraftfahrzeuges,
- Einstellen eines Realdrehmoments ($T_{Real}$) anhand des Solldrehmoments ($T_{Soll}$) durch das Motorsteuergerät (6), und
- Erfassen der sich einstellenden Ist-Drehzahl ($n_{Ist}$) und Übermitteln der selbigen an die Reglereinheit (4),

**dadurch gekennzeichnet, dass** die Ermittlung des Solldrehmoments ($T_{Soll}$) mittels einer PID-Regelung mit einem Fuzzy-Logik-Algorithmus durchgeführt wird, welcher die Einzelschritte Fuzzifizierung (S2), Regelbasis-Inferenz (S3) und Defuzzifizierung (S4) umfasst.

**5.** Verfahren nach Anspruch 4, **dadurch gekennzeichnet, dass** die Differenz zwischen Ist- ($n_{Ist}$) und Soll-Drehzahl ($n_{Soll}$) im Rahmen der Fuzzifizierung (S2) mindestens drei unscharfen Mengen mit einem bestimmten Zugehörigkeitsgrad zugeordnet wird.

**6.** Verfahren nach Anspruch 5, **dadurch gekennzeichnet, dass** eine Zuordnung zu genau drei Mengen "ok", "negativ" und "positiv" mit dem entsprechenden Zugehörigkeitsgrad durchgeführt wird.

**7.** Verfahren nach einem der Ansprüche 4 bis 6, **dadurch gekennzeichnet, dass** im Rahmen der Regelbasis-Inferenz (S3) eine Wenn-Dann-Regelstrategie mittels Minimumbildung durchgeführt wird.

**8.** Verfahren nach einem der Ansprüche 4 bis 7, **dadurch gekennzeichnet, dass** im Rahmen der Defuzzifizierung (S4) der Wert des Solldrehmoments ($T_{Soll}$) nach Art einer Schwerpunktmethode gebildet wird.

**9.** Computerprogrammprodukt für eine Anordnung nach einem der Ansprüche 1 bis 3, welche gemäß eines Verfahrens nach einem der Ansprüche 4 bis 8 betreibbar ist, wobei die Routine zur Bildung der Differenz zwischen Ist-($n_{Ist}$) und Soll-Drehzahl ($n_{Soll}$) und zum Ermitteln des Solldrehmoments ($T_{Soll}$) gemäß eines Fuzzy-Logik-Algorithmus durch entsprechende, in einer Software hinterlegte Steuerungsbefehle umgesetzt ist.

**10.** Datenträger mit einem Computerprogrammprodukt nach Anspruch 9.

Fig. 1

Fig. 2

EP 2 189 640 A1

Europäisches
Patentamt

European
Patent Office

Office européen
des brevets

**EUROPÄISCHER RECHERCHENBERICHT**

Nummer der Anmeldung

EP 09 17 2975

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 662 085 A (AUBOURG ALAIN MICHEL JEAN [FR] ET AL) 2. September 1997 (1997-09-02) | 1,4-5, 9-10 | INV. F02D31/00 |
| Y | * Zusammenfassung * <br> * Spalte 1, Zeile 8 - Zeile 15 * <br> * Spalte 2, Zeile 15 - Zeile 63 * <br> * Spalte 3, Zeile 46 - Spalte 5, Zeile 44 * <br> * Abbildungen 1,3 * <br> ----- | 2-3,6-8 | F02D41/02 <br> F02D41/26 <br> F16H63/50 |
| Y | DE 197 27 044 A1 (SIEMENS AG [DE]) 4. Februar 1999 (1999-02-04) <br> * Zusammenfassung * <br> * Seite 1, Zeile 17 - Zeile 26 * <br> * Seite 1, Zeile 37 - Seite 7, Zeile 29 * <br> ----- | 2-3 | |
| Y | FR 2 885 648 A1 (RENAULT SAS [FR]) 17. November 2006 (2006-11-17) <br> * Seite 6, Zeile 3 - Zeile 11 * <br> * Seite 12, Zeile 22 - Seite 16, Zeile 3 * <br> * Abbildungen 7-11 * <br> ----- | 6-8 | |
| A | DE 42 04 047 A1 (BOSCH GMBH ROBERT [DE]) 19. August 1993 (1993-08-19) <br> * Zusammenfassung * <br> * Spalte 2, Zeile 9 - Zeile 27 * <br> * Spalte 2, Zeile 51 - Spalte 3, Zeile 68 * <br> * Abbildungen 1,2 * <br> ----- | 1-10 | **RECHERCHIERTE SACHGEBIETE (IPC)** <br> F02D <br> F16H |
| A,D | DE 100 25 586 A1 (SIEMENS AG [DE]) 6. Dezember 2001 (2001-12-06) <br> * das ganze Dokument * <br> ----- | 1-10 | |
| A | EP 0 481 492 A2 (OMRON TATEISI ELECTRONICS CO [JP]) 22. April 1992 (1992-04-22) <br> * Zusammenfassung * <br> * Spalte 1, Zeile 5 - Spalte 3, Zeile 7 * <br> * Abbildung 1 * <br> ----- | 1,4,9-10 | |

Der vorliegende Recherchenbericht wurde für alle Patentansprüche erstellt

| Recherchenort | Abschlußdatum der Recherche | Prüfer |
|---|---|---|
| München | 25. November 2009 | Wettemann, Mark |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 17 2975

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-11-2009

| Im Recherchenbericht angeführtes Patentdokument | | Datum der Veröffentlichung | Mitglied(er) der Patentfamilie | | Datum der Veröffentlichung |
|---|---|---|---|---|---|
| US 5662085 | A | 02-09-1997 | DE | 69418611 D1 | 24-06-1999 |
| | | | DE | 69418611 T2 | 28-10-1999 |
| | | | WO | 9506810 A1 | 09-03-1995 |
| | | | EP | 0719382 A1 | 03-07-1996 |
| | | | FR | 2709514 A1 | 10-03-1995 |
| | | | JP | 3847332 B2 | 22-11-2006 |
| | | | JP | 9502005 T | 25-02-1997 |
| DE 19727044 | A1 | 04-02-1999 | FR | 2765160 A1 | 31-12-1998 |
| | | | GB | 2326682 A | 30-12-1998 |
| | | | JP | 3375123 B2 | 10-02-2003 |
| | | | JP | 11070825 A | 16-03-1999 |
| | | | US | 6128564 A | 03-10-2000 |
| FR 2885648 | A1 | 17-11-2006 | KEINE | | |
| DE 4204047 | A1 | 19-08-1993 | GB | 2264369 A | 25-08-1993 |
| | | | JP | 3305392 B2 | 22-07-2002 |
| | | | JP | 6028037 A | 04-02-1994 |
| DE 10025586 | A1 | 06-12-2001 | FR | 2809353 A1 | 30-11-2001 |
| | | | US | 2002039950 A1 | 04-04-2002 |
| EP 0481492 | A2 | 22-04-1992 | AT | 139347 T | 15-06-1996 |
| | | | DE | 69120199 D1 | 18-07-1996 |
| | | | DE | 69120199 T2 | 06-02-1997 |
| | | | ES | 2089084 T3 | 01-10-1996 |
| | | | JP | 3104249 B2 | 30-10-2000 |
| | | | JP | 4153703 A | 27-05-1992 |
| | | | US | 5247432 A | 21-09-1993 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10025586 A1